# EUROPÄISCHE PATENTSCHRIFT

(11) **EP 1 713 679 B1**
(45) Veröffentlichungstag und Bekanntmachung des Hinweises auf die Patenterteilung: **12.12.2007**
(21) Anmeldenummer: 05716633.2
(22) Anmeldetag: 07.02.2005
(51) Int. Cl.: B62D 5/09

(54) **LENKSYSTEM FÜR EIN FAHRZEUG**
STEERING SYSTEM FOR A VEHICLE
SYSTEME DE DIRECTION POUR UN VEHICULE

(30) Priorität: 12.02.2004 DE 102004006835
(43) Veröffentlichungstag der Anmeldung: 25.10.2006
(73) Patentinhaber: ZF Lenksysteme GmbH, 73527 Schwäbisch Gmünd (DE)
(72) Erfinder: KOGEL, Walter, 73453 Abtsgmünd (DE); HÄGELE, Michael, 73432 Aalen (DE)
(86) Internationale Anmeldenummer: PCT/EP2005/050513
(87) Internationale Veröffentlichungsnummer: WO 2005/077732

(56) Entgegenhaltungen:
- EP-A- 1 167 161
- DE-A1- 2 918 975
- DE-A1- 3 918 987
- US-A- 4 942 803

## Beschreibung

Die Erfindung betrifft ein Lenksystem für ein Fahrzeug, insbesondere eine hydraulisch unterstützte Servolenkung für ein Kraftfahrzeug, nach dem Oberbegriff des Anspruchs 1.

Servolenkungen mit einer Überiagerungsfunktion zur Überlagerung des auf eine Lenkhandhabe aufgebrachten Betätigungsmomentes mit einem Drehmoment eines Servomotors sind in mannigfaltiger Bauweise bekannt. Die Servolenkungen können auch aus Redundanzgründen mit mehreren Servomotoren gleicher Bauart (vgl. DE-PS 29 18 975) oder verschiedener Bauart, wie etwa mit einem hydraulischen oder hydrostatischen Servomotor und mit einem elektrischen Servomotor (vgl. US-PS 4 838 106) zur Betätigung eines Abtriebsgliedes eines Lenkgetriebes und damit zur Lenkwinkelverstellung ein oder mehrerer lenkbarer Räder eines Fahrzeugs, ausgeführt sein.

Die bekannten Servolenkungen benötigen entweder einen unvorteilhaft großen Bauraum oder der zweite Servomotor ist nur zu Redundanzgründen in den Lenksystemen angeordnet und über eine schaltbare Kupplung zuschaltbar oder aufgrund der Bauart (Hauptschlussmotor) von dem Betätigungsmoment an der Lenkhandhabe und dem Moment des ersten Servomotors übersteuerbar.

Die EP 1 167161 A2 beschreibt ein Lenksystem für ein Fahrzeug, mit einer Lenkspindel die eine Lenkhandhabe an ihrem einen Ende trägt. Die Lenkspindel ist an ihrem anderen Ende mit einem ersten Torsionselement verbunden, welches wiederum mit einem Drehschieber oder Drehkolben eines Lenkventils für die Steuerung eines hydraulischen Servomotors verbunden ist. Der hydraulische Servomotor betätigt ein Abtriebsglied eines Lenkgetriebes. Ein elektrischer Servomotor ist zudem zur Betätigung des Abtriebsgliedes des Lenkgetriebes redundant vorgesehen.

Die Verfügbarkeit von elektrischen Servomotoren, die aus Redundanzgründen in einem Servolenksystem wie in der EP 1 167 161 A2 beschrieben, vorgehalten sind, ist nicht sicher gewährleistet. Zudem sind solche Lenksysteme auf die Funktion eines einzigen Servomotors ausgelegt, wodurch diese nicht kostenoptimiert sind.

Der Erfindung liegt die Aufgabe zugrunde, ein Lenksystem für ein Fahrzeug anzugeben, dessen hydraulischer Servomotor im Betrieb sowohl mechanisch als auch elektrisch permanent unterstützt ist und das ausfallsicher ist und einen spurhaltungsgeregelten Betrieb ermöglicht.

Die Aufgabe wird mit einem Lenksystem mit den Merkmalen des Anspruchs 1 gelöst

Dadurch dass der elektrische Servomotor und die Lenkspindel des Lenksystems auf ein gemeinsames Drehglied wirken, wie etwa auf eine Abtriebswelle mit einem Schneckenrad, auf das eine Schnecke des elektrischen Servomotors wirkt und das gemeinsame Drehglied zwischen der Lenkspindel oder dem ersten Torsionselement und dem Drehschieber oder dem Drehkolben des Lenkventils angeordnet ist, kann das Lenkventil gemeinsam von der Lenkhandhabe und von dem elektrischen Servomotor angesteuert und der hydraulische Servomotor und das Abtriebsglied des Lenkgetriebes betätigt werden. Insbesondere in Abhängigkeit von dem an dem ersten Torsionselement gemessenen Drehwinkel kann der elektrische Servomotor zur Abgabe eines gleichsinnigen, das Betätigungsmoment an der Lenkhandhabe unterstützenden Servomotormomentes angesteuert werden.

Bevorzugte Ausführungen ergeben sich aus den Unteransprüchen.

Ist der elektrische Servomotor und dessen Motorsteuerung betriebsbereit, so wirkt der elektrische Servomotor gleichzeitig und gleichsinnig auf den hydraulischen Servomotor im Sinne, dass er dessen Motormoment auf das Abtriebsglied des Lenkgetriebes unterstützt und auch steuert. Der elektrische Servomotor wird durch Signale eines Drehwinkelsensors, welcher die Verdrehung des ersten Torsionselementes oder Drehstabes aufgrund von Betätigungsmomenten in der Lenkspindel mißt, über eine Steuerungs- und/oder Regelungseinrichtung des Lenksystems oder des Fahrzeugs gesteuert.

An dem gemeinsamen Drehglied ist der Drehschieber oder Drehkolben des Lenkventils drehfest angeordnet. Der Drehschieber oder Drehkolben ist an seinem anderen axialen Ende mit einem zweiten Torsionselement oder Drehstab mit einer Schnecke oder Schraube, die in einen Arbeitskolben des hydraulischen Servomotors eingreift, verbunden. Der Arbeitskolben wird sowohl durch die Drehung der Schnecke oder Schraube, als auch durch einen von dem Drehschieber oder Drehkolben gesteuerten Druckmittelstrom in Arbeitsräume zu beiden Seiten des Arbeitskolbens axial bewegt. Der Drehschieber wirkt dabei über Steuernuten mit einer Ventilbüchse, gegen die er begrenzt relativ verdrehbar ist, zusammen. Auf diese an sich bekannte Weise wird das Abtriebsglied des Lenkgetriebes bewegt, wobei über bekannte kinematische Verbindungen ein Lenkwinkel von ein oder mehreren Rädern des Fahrzeugs verändert werden kann.

Das gemeinsame Drehglied ist bevorzugt mit einer Kupplung mit dem Drehschieber oder dem Drehkolben des Lenkventils verbunden. Mit dem Lenksystem ist ein Fahrerassistenzbetrieb oder ein automatischer Betrieb möglich, indem der elektrische Servomotor parameterabhängig von der Steuerungs- und/oder Regelungseinrichtung angesteuert und das gemeinsame Drehglied und der Drehschieber oder Drehkolben des Lenkventils relativ zu der Ventilbüchse verdreht wird. Ein ausschließlich servomotorischer Antrieb durch den elektrischen und hydraulischen, vorzugsweise hydrostatischen Servomotor ist dadurch gegeben.

Bei Ausfall des hydraulischen Servomotors kann durch die Drehmomente an der Lenkspindel und des elektrischen Servomotors die Schnecke oder Schraube in dem Arbeitskolben des hydraulischen Servomotors gedreht werden und das Abtriebsglied des Lenkgetriebes bewegt werden.

Es kann auch zweckmäßig sein, insbesondere bei einem Ausfall des elektrischen Servomotors, das Schnecken- oder Schraubgetriebe zwischen dem elektrischen Servomotor und dem gemeinsamen Drehglied übersteuerbar durch das Betätigungsmoment an der Lenkspindel zu gestalten. Um das Lenksystem kompakt zu gestalten, ist es zweckmäßig ein Gehäuse des elektrischen Servomotors an einem Gehäuse des Lenkgetriebes festzulegen. Das mit der Schnecke in dem Arbeitskolben des hydraulischen Servomotors verbundene, zweite Torsionselement, ist wesentlich drehsteifer als das erste Torsionselement ausgeführt.

Anstatt das Lenkgetriebe im Sinne einer Kugelmutter-Hydrolenkung auszubilden, kann es zweckmäßig sein, den hydraulischen Servomotor in der Art eines Aktuators für eine Zähnstangen-Hydrolenkung auszubilden um die Verschiebebewegung einer Zahnstange oder einer Spindel zu unterstützen. Das erfindungsgemäße Lenksystem eignet sich neben der Anwendung in einem Personenkraftwagen besonders im Einsatz in einem Nutzkraftwagen.

Die Lenkspindel ist formschlüssig lösbar an einer Eingangswelle eines Lenkaktuators angebracht, wobei der Lenkaktuator in der beschriebenen Weise den elektrischen Servomotor mit dessen Schnecken- oder Schraubgetriebe, das gemeinsame Drehglied und dessen Kupplung an dem Drehschieber oder Drehkolben, das Lenkventil und das erste und zweite Torsionselement und den hydraulischen Servomotor und bevorzugt auch die Steuer- und/oder Regelungseinrichtung für den elektrischen Servomotor samt Lenkgetriebe in einer Einheit zusammenfasst.

Die Erfindung wird nun näher anhand eines Ausführungsbeispiels beschrieben und anhand der beiliegenden Zeichnung wiedergegeben.

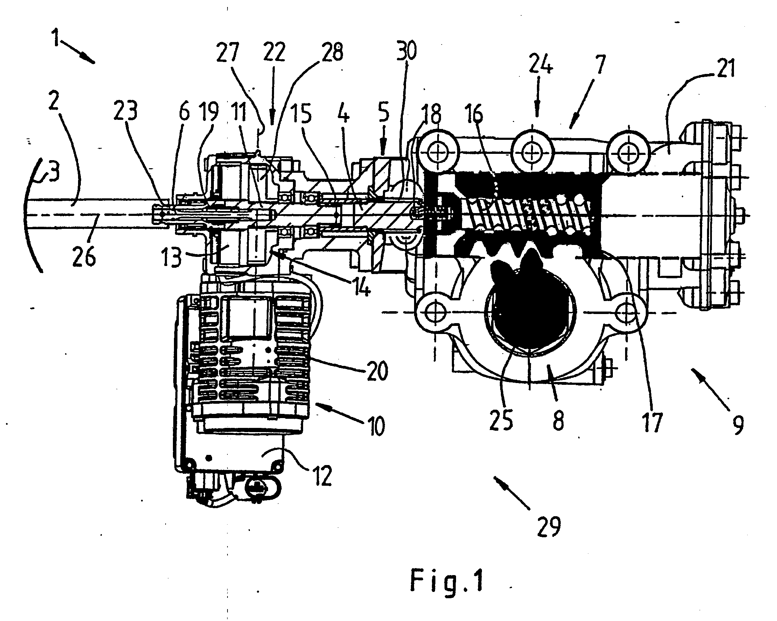

- Fig. 1: zeigt eine Ansicht und einen teilweisen Längsschnitt durch ein erfindungsgemäßes Lenksystem.

In Figur 1 ist in einer Ansicht und in einem teilweisen Längsschnitt durch eine getriebliche Verbindung 22 zwischen einer Eingangswelle 23 einer Lenkspindel 2 an einem Lenkaktuator 29, einem elektrischen Servomotor 10 und einer hydraulischen Kugelmutterumlauflenkung 24 ein Lenksystem 1 gezeigt.

Das Lenksystem 1 ist für den Einbau in einem Nutzkraftfahrzeug vorgesehen, kann aber prinzipiell in allen Arten von Fahrzeugen oder Kraftfahrzeugen Anwendung finden. Das Lenksystem 1 ermöglicht eine parallele, gleichzeitige Betätigung eines Abtriebsgliedes 8 eines Lenkgetriebes 9 durch die Lenkspindel 2, den elektrischen Servomotor 10 und durch einen hydraulischen Servomotor 7 der Kugelmutterumlauflenkung 24. Das Abtriebsglied 8 ist als Lenkwelle 25 zur Betätigung eines Lenkstockhebels ausgebildet. Das Lenksystem 1 ermöglicht ferner einen Betrieb und eine Betätigung des Abtriebsgliedes 8 bei Ausfall des elektrischen Servomotors 10 oder des hydraulischen Servomotors 7 und einen, automatischen, gesteuerten Betrieb mit dem elektrischen Servomotor 10 ohne Aufbringen eines Betätigungsmomentes an der Lenkhandhabe 3 und der Lenkspindel 2.

Das Lenksystem 1 weist eine Längsachse 26 auf, an der die Komponenten des Lenksystems 1 funktional in Reihe nacheinandergeschaltet angeordnet sind. Eine Lenkhandhabe 3 ist drehfest mit der Lenkspindel 2 verbunden. Die Lenkspindel 2 ist formschlüssig lösbar, drehfest mit der Eingangswelle 23 verbunden. Ober ein erstes Torsionselement 6, das als Drehstab ausgebildet ist, ist die Eingangswelle 23 mit einem gemeinsamen Drehglied 11, das als Welle ausgebildet ist, wirkverbunden. Im Axialbereich des ersten Torsionselementes 6 ist der elektrische Servomotor 10 mit seiner Längsachse 27 quer zu der Längsachse 26 des Lenksystems 1 angeordnet. Der elektrische Servomotor 10 treibt über ein Schneckengetriebe 14, bestehend aus einer Schnecke an seiner Motorwelle und einem Schneckenrad 28 das auf dem gemeinsamen Drehglied 11 festgelegt ist, das gemeinsame Drehglied 11 an.
Dies erfolgt nach Maßgabe einer Steuerungs- und/oder Regelungseinrichtung 12, welche Signale eines die Verdrehung des ersten Torsionselementes 6 messenden Drehwinkel-oder Drehmomentsensors 13 verarbeitet

Das gemeinsame Drehglied 11 ist wiederum drehfest über eine Kupplung 15 mit einem Drehschieber 4 des Lenkventils 5 verbunden. Der Drehschieber 4 wirkt in bekannter Weise über Steuernuten mit einer Ventilbüchse 30 des Lenkventils 5 zusammen, wobei die Auslenkung des Drehschiebers 4 gegenüber der Ventilbüchse 30 durch einen Querbolzen an einer Querbohrung des Drehschiebers 4 begrenzt ist. Der Drehschieber 4 steuert einen Druckmittelstrom in Arbeitsräume eines Zylinders des hydraulischen Servomotors 7 wodurch eine Axialverschiebung eines Arbeitskolbens 17 des hydraulischen Servomotors 7 bewirkt ist. Der hydraulische Servomotor 7 und dessen getriebliche Verbindung zu dem Abtriebsglied 8 - einer Verzahnung - sind in einem Gehäuse 21 des Lenkgetriebes 9 zusammengefaßt. Eine Schnecke 16 ist in Eingriff mit dem Arbeitskolben 17, wobei die Schnecke 16 bei deren Drehung den Arbeitskolben 17 über einen Kugelumlauf in eine Axialbewegung versetzt. Die Schnecke 16 ist mit einem zweiten, wesentlich steiferen Torsionselement 18 als dem ersten Torsionselement 6 drehbar an dem Drehschieber 4 des Lenkventils 5 festgelegt. Die Verdrehung des zweiten Torsionselementes 18 steuert die Druckmittelbeaufschlagung der Arbeitsräume des hydraulischen Zylinders.

Der elektrische Servomotor 10 ist mit seinem Gehäuse 20, welches die Steuerungs- und/oder Regelungseinrichtung 12 umschließt, an dem Gehäuse 21 des Lenkgetriebes 9 festgelegt und bildet mit diesem den Lenkaktuator 29.

In einen spurhaltungsgeregelten, automatischen Betrieb des Lenksystems 1 wird das gemeinsame Drehglied 11 von dem elektrischen Servomotor 10 betätigt, der über eine Verdrehung des zweiten Torsionselementes 18 und den Drehschieber 4 den Druckmittelfluß in die Arbeitsräume des hydraulischen Zylinders steuert und mechanisch über die Schnecke 16 den Arbeitskolben 17 axial bewegt Bei Ausfall des hydraulischen Servomotors 7 wird das Abtriebsglied 8 des Lenkgetriebes 9 und damit der Arbeitskolben 17 durch das auf das gemeinsame Drehglied 11 wirkende Betätigungsmoment an der Lenkhandhabe 3 und/oder durch das Motormoment des elektrischen Servomotors 10 betätigt. Das erste Torsionselement 6 kann dabei vor Überdehnung, insbesondere wenn der elektrische Servomotor 10 ausgefallen sein sollte, geschützt werden, indem ein Mitnahmeelement 19 zwischen der Lenkspindel 2 und dem gemeinsamen Drehglied 11 das erste Torsionselement 6 überbrückt.

### Bezugszeichenliste

| | | | |
|---|---|---|---|
| 1 | Lenksystem | 26 | Längsachse, v. 1 |
| 2 | Lenkspindel | 27 | Längsachse, v. 10 |
| 3 | Lenkhandhabe | 28 | Schneckenrad |
| 4 | Drehschieber, Drehkolben | 29 | Lenkaktuator |
| 5 | Lenkventil | 30 | |
| 6 | Torsionselement, erstes | 31 | |
| 7 | Servomotor, hydraulisch | 32 | |
| 8 | Abtriebsglied | 33 | |
| 9 | Lenkgetriebe | 34 | |
| 10 | Servomotor, elektrisch | 35 | |
| 11 | Drehglied | 36 | |
| 12 | Steuerungs- und/oder Regelungseinrichtung | 37 | |
| 13 | Drehwinkelsensor | 38 | |
| 14 | Schraub- Schneckengetriebe | 39 | |
| 15 | Kupplung | 40 | |
| 16 | Schnecke | 41 | |
| 17 | Arbeitskolben | 42 | |
| 18 | Torsionselement, zweites | 43 | |
| 19 | Mitnahmeelement | 44 | |
| 20 | Gehäuse, v. 10 | 45 | |
| 21 | Gehäuse, v. 9 | 46 | |
| 22 | Verbindung, getrieblich | 47 | |
| 23 | Eingangswelle | 48 | |
| 24 | Kugelmutterumlauflenkung | 49 | |
| 25 | Lenkwelle | 50 | |
| | | | |
| | | | |

## Patentansprüche

1. Lenksystem für ein Fahrzeug, insbesondere hydraulisch unterstützte Servolenkung für ein Kraftfahrzeug, mit einer Lenkspindel (2) die eine Lenkhandhabe (3) an ihrem einen Ende mit einem Drehschieber oder Drehkolben (4) eines Lenkventils (5) über ein erstes Torsionselement (6) verbindet, und mit einem hydraulischen Servomotor (7) zur Betätigung eines Abtriebsgliedes (8) eines Lenkgetriebes (9), wobei ein Druckmittelstrom in Arbeitsräume des hydraulischen Servomotors (7) durch das Lenkventil (5) gesteuert ist, und mit einem elektrischen Servomotor (10) zur Betätigung des Abtriebsgliedes (8), **dadurch gekennzeichnet, dass** der elektrische Servomotor (10) und die Lenkspindel (2) auf ein gemeinsames Drehglied (11) zwischen dem ersten Torsionselement (6) und dem Drehschieber oder Drehkolben (4) wirken.

2. Lenksystem nach Anspruch 1, **dadurch gekennzeichnet, dass** der elektrische Servomotor (10) und der hydraulische Servomotor (7) im Betrieb des Lenksystems (1) gleichzeitig auf das Abtriebsglied (8) des Lenkgetriebes (9) wirken.

3. Lenksystem nach einem der Ansprüche 1 oder 2, **dadurch gekennzeichnet, dass** der elektrische Servomotor (10) über eine Steuerungs- und/oder Regelungseinrichtung (12) des Lenksystems (1) oder des Fahrzeuges in Abhängigkeit von Signalen eines Drehwinkelsensors (13), welcher einen Drehwinkel und/oder ein Betätigungsmoment an der Lenkhandhabe (3) erfasst, gesteuert ist.

4. Lenksystem nach einem der Ansprüche 1 bis 3, **dadurch gekennzeichnet, dass** der elektrische Servomotor (10) über ein Schraub- oder Schneckengetriebe (14) auf das gemeinsame Drehglied (11) wirkt.

5. Lenksystem nach einem der Ansprüche 1 bis 4, **dadurch gekennzeichnet, dass** das gemeinsame Drehglied (11) mit einer Kupplung (15) mit dem Drehschieber oder Drehkolben (4) des Lenkventils (5) verbunden ist.

6. Lenksystem nach einem der Ansprüche 1 bis 5, **dadurch gekennzeichnet, dass** der hydraulische Servomotor (7) einen von einer Schnecke (16) betätigten Arbeitskolben (17) aufweist, wobei die Schnecke (16) über ein zweites Torsionselement (18) drehfest mit dem Drehschieber oder Drehkolben (4) des Lenkventils (5) verbunden ist.

7. Lenksystem nach Anspruch 6, **dadurch gekennzeichnet, dass** der Druckmittelstrom in die Arbeitsräume des hydraulischen Servomotors (7) in Abhängigkeit von der Verdrehung des zweiten Torsionselementes (18) gesteuert ist.

8. Lenksystem nach einem der Ansprüche 1 bis 7, **dadurch gekennzeichnet, dass** in einem spurhaltungsgeregelten, automatischen Betrieb des Lenksystems (1) oder in einem Fahrerassistenzbetrieb des Lenksystems (1) das gemeinsame Drehglied (11) ausschließlich von dem elektrischen Servomotor (10) betätigt ist.

9. Lenksystem nach einem der Ansprüche 1 bis 8, **dadurch gekennzeichnet, dass** bei Ausfall des hydraulischen Servomotors (7) das Abtriebsglied (8) des Lenkgetriebes (9) durch die Lenkspindel (2) und durch den elektrischen Servomotor (10) betätigt ist.

10. Lenksystem nach einem der Ansprüche 1 bis 9, **dadurch gekennzeichnet, dass** der elektrische Servomotor (10) uhd/oder das Schnecken- oder Schraubgetriebe (14) zwischen dem elektrischen Servomotor (10) und dem gemeinsamen Drehglied (11) durch Betätigen der Lenkhandhabe (3) übersteuerbar ist.

11. Lenksystem nach einem der Ansprüche 1 bis 10, **dadurch gekennzeichnet, dass** bei Ausfall des elektrischen Servomotors (10) das Lenkventil (5) und der hydraulische Servomotors (7) durch die Lenkhandhabe (3) betätigbar ist, wobei das erste. Torsionselement (6) durch ein Mitnahmeelement (19) zwischen der Lenkspindel (2) und dem gemeinsamen Drehglied (11) überbrückt ist.

12. Lenksystem nach einem der Ansprüche 1 bis 11, **dadurch gekennzeichnet, dass** ein Gehäuse (20) des elektrischen Servomotors (10) an einem Gehäuse (21) des Lenkgetriebes (9) festgelegt ist.

13. Lenksystem nach einem der Ansprüche 6 bis 12, **dadurch gekennzeichnet, dass** das zweite Torsionselement (18) drehsteifer als das erste Torsionselement(6) ist.

14. Lenksystem nach einem der Ansprüche 1 bis 13, **dadurch gekennzeichnet, dass** der hydraulische Servomotor (7) in einer Zahnstangenhydrolenkung eingesetzt ist.

15. Lenksystem nach einer der Ansprüche 1 bis 14, **dadurch gekennzeichnet, dass** das Lenksystem (1) in einem Nutzkraftfahrzeug eingesetzt ist.

16. Lenksystem nach einem der Ansprüche 1 bis 15, **dadurch gekennzeichnet, dass** in einem Lenkaktuator (29) der elektrische Servomotor (10), das gemeinsame Drehglied (11), der hydraulische Servomotor (7), das erste und zweite Torsionselement (6,18), das Lenkventil (5) und das Abtriebsglied (8) zusammengefasst sind.

## Claims

1. Steering system for a vehicle, in particular a hydraulically assisted power steering system for a motor vehicle, comprising a steering spindle (2) connecting a steering control (3) at its one end to a rotary slide valve or a rotary piston (4) of a steering valve (5) by way of a first torsion element (6), and further comprising a hydraulic servomotor (7) for actuating an output member (8) of a steering mechanism (9), the steering valve (5) controlling a pressure medium flow in working chambers of the hydraulic servomotor (7), and the output member (8) being further actuated by an electrical servomotor (10), **characterized in that** the electrical servomotor (10) and the steering spindle (2) act on a common rotating member (11) between the first torsion element (6) and the rotary slide valve or rotary piston (4).

2. Steering system according to Claim 1, **characterized in that** the electrical servomotor (10) and the hydraulic servomotor (7) act simultaneously on the output member (8) of the steering mechanism (9) in the operation of the steering system (1).

3. Steering system according to either of Claims 1 or 2, **characterized in that** the electrical servomotor (10) is controlled by way of a control and/or feedback control device (12) of the steering system (1) or the vehicle as a function of signals from a rotational angle sensor (13), which registers a rotational angle and/or an actuating torque on the steering control (3).

4. Steering system according to any one of Claims 1 to 3, **characterized in that** the electrical servomotor (10) acts on the common rotating member (11) by way of a worm gear (14).

5. Steering system according to any one of Claims 1 to 4, **characterized in that** the common rotating member (11) is connected by a coupling (15) to the rotary slide valve or rotary piston (4) of the steering valve (5).

6. Steering system according to any one of Claims 1 to 5, **characterized in that** the hydraulic servomotor (7) has a working piston (17) actuated by a worm (16), the worm (16) being rotationally locked to the rotary slide valve or the rotary piston (4) of the steering valve (5) by means of a second torsion element (18).

7. Steering system according to Claim 6, **characterized in that** the pressure medium flow into the working chambers of the hydraulic servomotor (7) is controlled as a function of the torsion of the second torsion element (18).

8. Steering system according to any one of Claims 1 to 7, **characterized in that** in a directional stability-controlled, automatic operation of the steering system (1) or in a driver assistance mode of the steering system (1), the common rotating member (11) is actuated exclusively by the electrical servomotor (10).

9. Steering system according to any one of Claims 1 to 8, **characterized in that** in the event of failure of the hydraulic servomotor (7), the output member (8) of the steering mechanism (9) is actuated by the steering spindle (2) and by the electrical servomotor (10).

10. Steering system according to any one of Claims 1 to 9, **characterized in that** the electrical servomotor (10) and/or the worm gear (14) between the electrical servomotor (10) and the common rotating member (11) can be overridden by operation of the steering control (3).

11. Steering system according to any one of Claims 1 to 10, **characterized in that** in the event of failure of the electrical servomotor (10), the steering valve (5) and the hydraulic servomotor (7) can be actuated by the steering control (3), the first torsion element (6) being bypassed by a driving element (19) between the steering spindle (2) and the common rotating member (11).

12. Steering system according to any one of Claims 1 to 11, **characterized in that** a housing (20) of the electrical servomotor (10) is fixed to a housing (21) of the steering mechanism (9).

13. Steering system according to any one of Claims 6 to 12, **characterized in that** the second torsion element (18) is more torsionally stiff than the first torsion element (6).

14. Steering system according to any one of Claims 1 to 13, **characterized in that** the hydraulic servomotor (7) is used in a hydraulic rack and pinion steering.

15. Steering system according to any one of Claims 1 to 14, **characterized in that** the steering system (1) is used in a commercial motor vehicle.

16. Steering system according to any one of Claims 1 to 15, **characterized in that** the electrical servomotor (10), the common rotating member (11), the hydraulic servomotor (7), the first and second torsion elements (6, 18), the steering valves (5) and the output member (8) are combined in one steering actuator (29).

## Revendications

1. Système de direction pour un véhicule, notamment servodirection à assistance hydraulique pour un véhicule automobile, comprenant un arbre de direction (2) qui relie une manette de direction (3) à l'une de ses extrémités avec un tiroir rotatif ou un piston rotatif (4) d'une vanne de direction (5) par le biais d'un premier élément de torsion (6), et comprenant un servomoteur hydraulique (7) pour actionner un élément de prise de force (8) d'un mécanisme de direction (9), un courant de fluide sous pression étant commandé dans les espaces de travail du servomoteur hydraulique (7) par la vanne de direction (5), et comprenant un servomoteur électrique (10) pour actionner l'élément de prise de force (8), **caractérisé en ce que** le servomoteur électrique (10) et l'arbre de direction (2) agissent sur un élément rotatif commun (11) entre le premier élément de torsion (6) et le tiroir rotatif ou le piston rotatif (4).

2. Système de direction selon la revendication 1, **caractérisé en ce que** pendant le fonctionnement du système de direction (1), le servomoteur électrique (10) et le servomoteur hydraulique (7) agissent simultanément sur l'élément de prise de force (8) du mécanisme de direction (9).

3. Système de direction selon l'une des revendications 1 ou 2, **caractérisé en ce que** le servomoteur électrique (10) est commandé par le biais d'un dispositif de commande et/ou de régulation (12) du système de direction (1) ou du véhicule en fonction de signaux d'un capteur d'angle de rotation (13) qui détecte un angle de rotation et/ou un moment d'actionnement sur la manette de direction (3).

4. Système de direction selon l'une des revendications 1 à 3, **caractérisé en ce que** le servomoteur électrique (10) agit sur l'élément rotatif commun (11) par le biais d'un engrenage hélicoïdal ou à vis sans fin (14).

5. Système de direction selon l'une des revendications 1 à 4, **caractérisé en ce que** l'élément rotatif commun (11) est relié par un accouplement (15) avec le tiroir rotatif ou le piston rotatif (4) de la vanne de direction (5).

6. Système de direction selon l'une des revendications 1 à 5, **caractérisé en ce que** le servomoteur hydraulique (7) présente un piston de travail (17) actionné par une vis sans fin (16), la vis sans fin (16) étant reliée de manière antitorsion par le biais d'un deuxième élément de torsion (18) avec le tiroir rotatif ou le piston rotatif (4) de la vanne de direction (5).

7. Système de direction selon la revendication 6, **caractérisé en ce que** le courant de fluide sous pression dans les espaces de travail du servomoteur hydraulique (7) est commandé en fonction de la rotation du deuxième élément de torsion (18).

8. Système de direction selon l'une des revendications 1 à 7, **caractérisé en ce que** dans un fonctionnement automatique avec régulation de la trajectoire du système de direction (1) ou dans un mode d'assistance au conducteur du système de direction (1), l'élément rotatif commun (11) est uniquement actionné par le servomoteur électrique (10).

9. Système de direction selon l'une des revendications 1 à 8, **caractérisé en ce qu'**en cas de panne du servomoteur hydraulique (7), l'élément de prise de force (8) du mécanisme de direction (9) est actionné par l'arbre de direction (2) et par le servomoteur électrique (10).

10. Système de direction selon l'une des revendications 1 à 9, **caractérisé en ce que** le servomoteur électrique (10) et/ou l'engrenage hélicoïdal ou à vis sans fin (14) entre le servomoteur électrique (10) et l'élément rotatif commun (11) peut être commandé de manière prioritaire en actionnant la manette de direction (3).

11. Système de direction selon l'une des revendications 1 à 10, **caractérisé en ce qu'**en cas de panne du servomoteur électrique (10), la vanne de direction (5) et le servomoteur hydraulique (7) peuvent être actionnés par le biais de la manette de direction (3), le premier élément de torsion (6) étant court-circuité par un élément d'entraînement (19) entre l'arbre de direction (2) et l'élément rotatif commun (11).

12. Système de direction selon l'une des revendications 1 à 11, **caractérisé en ce qu'**un boîtier (20) du servomoteur électrique (10) est fixé à un boîtier (21) du mécanisme de direction (9).

13. Système de direction selon l'une des revendications 6 à 12, **caractérisé en ce que** le deuxième élément de torsion (18) est plus rigide à la torsion que le premier élément de torsion (6).

14. Système de direction selon l'une des revendications 1 à 13, **caractérisé en ce que** le servomoteur hydraulique (7) est utilisé dans une direction hydraulique à crémaillère.

15. Système de direction selon l'une des revendications 1 à 14, **caractérisé en ce que** le système de direction (1) est utilisé dans un véhicule utilitaire.

16. Système de direction selon l'une des revendications 1 à 15, **caractérisé en ce que** le servomoteur électrique (10), l'élément rotatif commun (11), le servomoteur hydraulique (7), le premier et le deuxième éléments de torsion (6, 18), la vanne de direction (5) et l'élément de prise de force (8) sont regroupés dans un actionneur de direction (29).
